Europäisches Patentamt

European Patent Office

Office européen des brevets

(11) Veröffentlichungsnummer: **0 128 632**
A2

(12) **EUROPÄISCHE PATENTANMELDUNG**

(21) Anmeldenummer: 84200878.1

(22) Anmeldetag: 08.06.84

(51) Int. Cl.³: **B 65 G 17/06**

(30) Priorität: 10.06.83 DE 3321018

(43) Veröffentlichungstag der Anmeldung: 19.12.84
Patentblatt 84/51

(84) Benannte Vertragsstaaten: **IT**

(71) Anmelder: **Fahrion, Otmar, Iltisweg 31,
D-7014 Kornwestheim (DE)**

(72) Erfinder: **Fahrion, Otmar, Iltisweg 31,
D-7014 Kornwestheim (DE)**

(74) Vertreter: **Ostertag, Reinhard et al, Patentanwälte Dr.
Ulrich Ostertag Dr. Reinhard Ostertag Eibenweg 10,
D-7000 Stuttgart 70 (DE)**

(54) **Ketten-Fördereinheit.**

㊼ Eine Fördereinheit für einen Palettenförderer hat eine Gliederkette (24), auf deren Bolzen (40) jeweils eine Tragkappe (26) aufgesetzt ist. Die Tragkappen (26) haben U-förmigen transversalen Querschnitt und sitzen mit ihren Schenkeln (44) auf dem Kettenbolzen (40). Die in Förderrichtung gesehen vorne bzw. hinten liegenden Endflächen (52, 54) der Tragkörper (26) sind konvex bzw. konkav zylindrisch geformt, wobei die Achsen der Zylinderflächen jeweils mit einer Bolzenachse zusammenfallen.

EP 0 128 632 A2

0128632

## Beschreibung

Die Erfindung betrifft eine Ketten-Fördereinheit gemäß dem Oberbegriff des Anspruches 1.

Es sind Förderer für Paletten bekannt, welche zwei in einer horizontalen Förderebene angeordnete Förderketten aufweisen, die unter Abstand parallel zueinander laufen. Dabei sind die Gelenkachsen der Kette senkrecht zur Förderkette ausgerichtet. Außerhalb der außenliegenden Kettenlaschen sind plättchenförmige Tragglieder vorgesehen, von denen das untere in Gleitberührung auf einer Abstützfläche des Fördererrahmens läuft, während das obere ein Ende einer Palette abstützt (das andere Palettenende wird von den oberen Tragplättchen der zweiten, unter Abstand angeordneten Fördereinheit getragen). Die in Förderrichtung gesehen vorderen und hinteren Stirnflächen der Tragplättchen sind konvex bzw. konkav zylindrisch ausgebildet, wobei die Achsen dieser Zylinderflächen mit Bolzenachsen der Kette zusammenfallen. Auf diese Weise können die Tragplättchen eine im wesentlichen glatt durchgehende Fläche bilden, auch wenn der Förderweg Kurven aufweist.

Nachteilig ist an derartigen Palettenförderern, daß der Förderweg in der Förderebene immer geschlossen sein muß. Derartige Palettenförderer benötigen somit viel Platz. Außerdem tritt in Kurven des Förderweges zwangsläufig Schlupf auf, da die beiden unter Abstand angeordneten Förderketten einen unterschiedlich großen Weg durchlaufen. Nachteilig ist an diesen bekannten Palettenförderern ferner, daß man den Abstand der beiden Fördereinheiten nicht ändern kann, da die Umlenkeinheiten, die bei den Kurven des Förderweges vorgesehen sind (z.B. Umlenkschienen oder Umlenkräder), nur für genau einen Abstand der Fördereinheiten passen.

Die vorgenannten Schwierigkeiten werden nicht angetroffen bei Rollenförderern. Diese haben aber den Nachteil, daß zwischen dem geförderten Gut und den Fördermitteln nur ein linienhafter Kontakt besteht, so daß keine nennenswerten Kräfte zum Beschleunigen und Abbremsen der geförderten Güter ausgeübt werden können. Gerade in Fertigungsstraßen ist aber ein intermittierendes Weiterbewegen von palettengetragener Werkstücke von einer Arbeitsstation zur nächsten sehr wichtig.

Durch die vorliegende Erfindung soll eine Ketten-Fördereinheit gemäß dem Oberbegriff des Anspruches 1 dahingehend weitergebildet werden, daß ein unter Verwendung solcher Fördereinheiten zusammengestellter Palettenförderer leicht auf Paletten unterschiedlicher Breite umgestellt werden kann und trotzdem weiterhin auf einer glatt durchgehenden Förderfläche ein flächiger Kontakt zu den geförderten Paletten besteht.

Diese Aufgabe ist erfindungsgemäß gelöst durch eine Ketten-Fördereinheit gemäß Anspruch 1.

Bei der erfindungsgemäßen Ketten-Fördereinheit liegen die Gelenkachsen der Förderkette parallel zu den tragenden Flächen der Tragglieder, da letztere nun als Kappen mit die Bolzen der Kette aufnehmenden Schenkeln und einem die Schenkel verbindenden Tragabschnitt ausgebildet sind. Die Tragabschnitte sind bei normalem Einsatz im wesentlichen horizontal ausgerichtet, so daß die Förderkette um Umlenkräder mit horizontaler Achse umläuft. Jede Fördereinheit hat somit ein obenliegendes Arbeitstrum, dessen glatt durchgehende Mitnahmefläche durch die Oberseiten der Tragkappen gebildet ist, sowie ein darunterliegendes Rücklauftrum. Derartige Fördereinheiten können leicht aufeinander zu und voneinander wegbewegt werden, um unterschiedlichen Palettenbreiten Rechnung zu tragen, ohne daß an irgendeiner Stelle des Förderweges Schlupf in Kauf genommen werden muß.

0128632

Ein weiterer Vorteil der erfindungsgemäßen Fördereinheit ist der, daß die Förderkette durch die Tragkappen von drei Seiten her zuverlässig gegen das Eindringen von Fremdkörpern und Verunreinigungen geschützt ist.

Vorteilhafte Weiterbildungen der Erfindung sind in Unteransprüchen angegeben.

Mit der Weiterbildung der Erfindung gemäß Anspruch 2 wird erreicht, daß auch auf verhältnismäßig kleinen Durchmesser aufweisenden Umlenkrädern eine gute Kapselung der Förderkette erreicht wird, da die einzelnen Tragkappen in Förderrichtung gesehen kleine Abmessung haben.

Mit der Weiterbildung der Erfindung gemäß Anspruch 3 wird erreicht, daß die Paletten in zur Förderebene senkrechter Richtung besonders präzise positioniert werden, da das Gewicht direkt über die starr ausgebildeten Tragkappen auf den Rahmen des Förderers übertragen werden. Zugleich braucht auch die Förderkette selbst den zuweilen sehr hohen Gewichtskräften der bewegten Lasten nicht standzuhalten. Bei den bekannten Fördereinheiten mit senkrecht zur Förderebene ausgerichteten Bolzenachsen sind dagegen die Bolzen, Laschen und Hülsen der Förderkette zugleich kraftübertragende Teile beim Abstützen des geförderten Gutes.

Mit der Weiterbildung der Erfindung gemäß Anspruch 4 wird erreicht, daß die Paletten auf dem Weg zwischen Arbeitsstationen, wo es auf eine genaue Positionierung weniger ankommt, mit nur geringer Reibung gefördert werden können.

Da bei der erfindungsgemäßen Fördereinheit Förderkette und Tragkappen in beiden Richtungen senkrecht zur Förderebene bewegbar sind, kann man gemäß Anspruch 6 den Förderweg bei vorgegebenen Arbeitsstationen aus der Hauptförderebene ab-

- 4 -

senken, um eine Palette auf einem zwischen den beiden Fördereinheiten angeordneten starren Tisch abzusetzen.

Die Weiterbildung der Erfindung gemäß Anspruch 7 ist im Hinblick auf eine vollständige Kapselung der Förderkette von
Vorteil. An diese können aus dem Außenraum keinerlei Verunreinigungen und Fremdkörper gelangen, da die Tragkappen zusammen mit den beiden seitlichen Wangenplatten ein dichtes
Gehäuse begrenzen.

Die Weiterbildung der Erfindung gemäß Anspruch 8 ermöglicht
es, den Förderweg sowohl senkrecht zur Förderebene als auch
in der Förderebene gekrümmt zu wählen, wobei nach wie vor eine
glatt durchgehende flächige Auflage für geförderte Paletten
gewährleistet ist.

Die Weiterbildungen der Erfindung gemäß den Ansprüchen 10 und
11 sind im Hinblick auf ein einfaches Herstellen der Kette
von Vorteil. Obwohl die Tragkappen die eigentliche Förderkette fast vollständig umgeben, braucht man keinerlei komplizierte Werkzeuge, um die verschiedenen miteinander zu verbindenden Teile aufeinander auszufluchten. Vielmehr kann die
Förderkette selbst bei noch guter Zugänglichkeit in an sich
bekannter Weise montiert werden, und anschließend werden die
Tragkappen nacheinander über die Förderkette gestülpt und
auf die zugeordnete Gelenkachse ausgerichtet, worauf dann
sämtliche Teile durch Verdrängen des Montagebolzens durch
den Kettenbolzen fest miteinander verbunden werden.

Die Weiterbildung der Erfindung gemäß Anspruch 11 ist hierbei im Hinblick auf ein selbsttätiges Ausgleichen kleiner
Ausfluchtungsfehler der Tragkappe bezüglich der zugeordneten
Gelenkachse von Vorteil.

Nachstehend wird die Erfindung anhand von Ausführungsbeispielen unter Bezugnahme auf die Zeichnung näher erläutert. In dieser zeigen:

Figur 1: eine seitliche Ansicht eines Teiles einer Fördereinheit eines Palettenförderers, welcher einem der Umlenkräder für die Förderkette benachbart ist, wobei eine seitliche Wangenplatte des Rahmens der Fördereinheit abgenommen ist;

Figur 2: einen vertikalen Schnitt durch die Fördereinheit nach Figur 1 längs der abgewinkelten Schnittlinie II-II;

Figur 3: eine Aufsicht auf einen Teil des oberen Arbeitstrums der Fördereinheit nach Figur 1, wobei Teile von Tragkappen weggebrochen sind;

Figur 4: eine schematische seitliche Ansicht eines Teiles einer abgewandelten Fördereinheit;

Figur 5: zwei um 90° gegeneinander versetzte, in vertikaler Richtung aufeinander ausgefluchtete Ansichten einer mit Tragkappen versehenen Kreuzgelenkkette für einen Palettenförderer;

Figur 6: einen transversalen Schnitt durch die Anordnung nach Figur 5 längs der dortigen Schnittlinie VI-VI;

Figur 7: einen transversalen Schnitt durch eine weiter abgewandelte Fördereinheit, welcher eine Abwandlung des oberen Teiles von Figur 2 darstellt; und

Figur 8: verschiedene Stadien beim Zusammenbau einer mit Tragkappen bestückten Gliederkette.

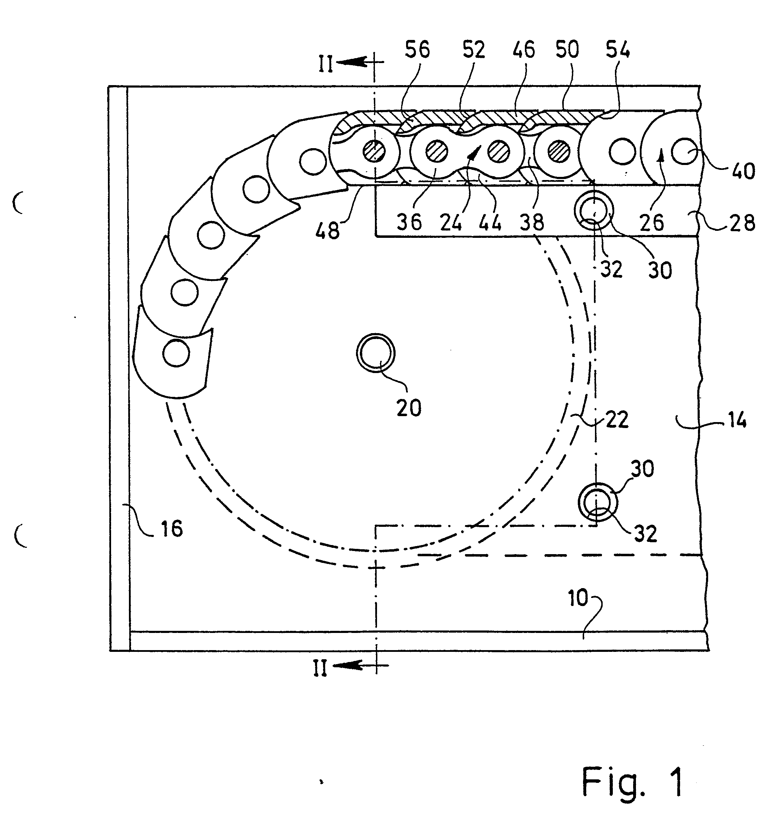

Die in den Figuren 1 bis 3 gezeigte Fördereinheit, welche zusammen mit einer gleich ausgebildeten, unter seitlichem Abstand angeordneten Fördereinheit einen Palettenförderer bildet, hat eine Bodenplatte 10, an welcher mittels Schrauben 12 zwei seitliche Wangenplatten 14 befestigt sind. Letztere sind durch eine dazwischenliegende Endplatte 16 versteift und dicht verbunden.

In den Wangenplatten 14 ist über Lager 18 eine Welle 20 eines Kettenrades 22 gelagert, über welche eine insgesamt mit 24 bezeichnete Gliederkette läuft. Von dieser sind nur einige Kettenglieder in Einzelheiten wiedergegeben; im übrigen ist die Kette durch eine gestrichelte Linie angedeutet.

Die Gliederkette 24 trägt eine Vielzahl bündig aneinanderstoßender Tragkappen 26, welche im Bereich des obenliegenden Trums der Gliederkette 24 durch eine rahmenfeste Stützplatte 28 abgestützt sind.

Die Stützplatte 28 dient zugleich als oberes Distanzstück zwischen den Wangenplatten 14, und durch sie erstrecken sich Traghülsen 30, die in Bohrungen 32 der Wangenplatte 14 Aufnahme finden. Durch die Traghülsen 30 wiederum erstrecken sich Gewindebolzen 33, welche zusammen mit Muttern 34 zum Verspannen der Wangenplatten 14 dienen. Auf ähnliche Weise sind auch die unteren Enden der Wangenplatten zusammengehalten.

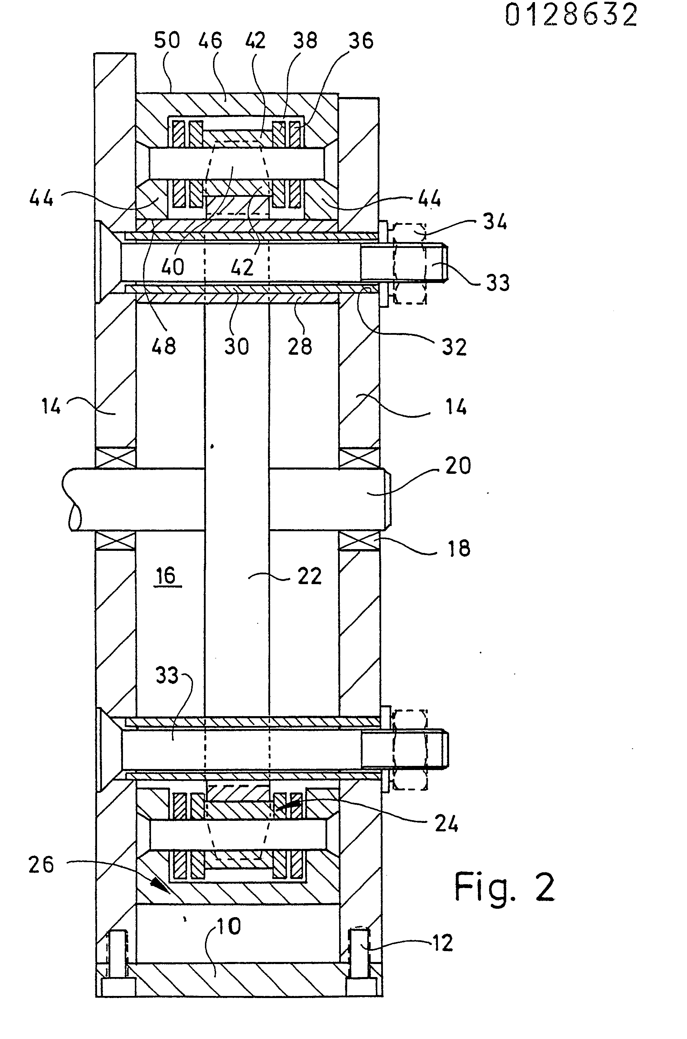

Wie insbesondere aus den Figuren 1 und 2 ersichtlich ist, gehören zu jedem Kettenglied zwei außenliegende Laschen 36 und zwei innenliegende Laschen 38 sowie Bolzen 40. Die Bolzen 40 sitzen im Preßsitz in den äußeren Laschen 36 und tragen gelenkig die inneren Laschen 38. Letztere sind durch dazwischenliegende Hülsen 42 auf vorgegebenem Abstand gehalten.

Wie am besten aus Figur 2 ersichtlich, erstrecken sich die

- 7 -

Bolzen 40 über die außenliegenden Laschen 36 hinaus und durchsetzen Schenkel 44 der Tragkappen 26. Die Schenkel 44 sind durch einen Tragabschnitt 46 verbunden, derart, daß die Tragkappen ein transversales Querschnittsprofil in Form eines rechteckigen U aufweisen. Die Außenflächen der Schenkel 44 sind planparallel und passen im Gleitspiel zwischen die Innenseiten der Wangenplatten 14.

Am in den Figuren 1 und 2 untenliegenden Ende sind die Schenkel 44 mit großen Gleitflächen 48 versehen, welche parallel zu den ebenfalls großen Oberseiten 50 der Tragabschnitte 46 verlaufen. Die Gleitflächen 48 bilden somit eine im wesentlichen durchgehende Gleitfläche, welche in Berührung zur Oberseite der Stützplatte 28 steht, während die Oberseiten 50 zusammen eine durchgehende Tragfläche bilden, auf welcher ein Ende einer Palette abgestützt und im Reibschluß mitgenommen werden kann.

In einer senkrecht auf der Förderebene stehenden und die Förderrichtung enthaltenden Schnittebene gesehen (vergl. Figur 1) haben die Tragkappen 26 jeweils eine konvex gekrümmte zylindrische Stirnfläche 52 und eine komplementär konkav gekrümmte zylindrische Stirnfläche 54. Die Achse der konvexen Stirnfläche 52 fällt mit der Achse desjenigen Bolzens 40 zusammen, welcher sich durch die Schenkel 44 einer betrachteten Tragkappe 26 erstreckt. Die Achse der konkaven Stirnfläche 54 einer betrachteten Tragkappe fällt mit der Achse des nächstbenachbarten der Bolzen 40 zusammen.

Die Stirnflächen 52 und 54 betreffen gleichermaßen die Schenkel 44 und den Tragabschnitt 46. An letzteren und die Schenkel 44 ist zugleich ein nach innen gezogener Dichtsteg 56 angeformt, um auch bei stärkerer Krümmung der Förderkette eine Abdichtung aufrechtzuerhalten.

Aus den Figuren 1 und 2 ist gut ersichtlich, daß die Tragkappen 26 zusammen mit den Wangenplatten 14 auf sehr einfache
Weise eine vollständige Kapselung der Gliederkette 24 sicherstellen. Zugleich ist ein guter flächiger Kontakt zu zu fördernden Paletten gewährleistet. Deren Gewicht wird über die
Tragkappen 26 großflächig verteilt auf die Stützplatte 28
weitergegeben. Zugleich ist gewährleistet, daß die Paletten
in vertikaler Richtung sehr genau positioniert sind, da die
Tragkappen 26 starre Teile sind, z.B. Feingußteile.

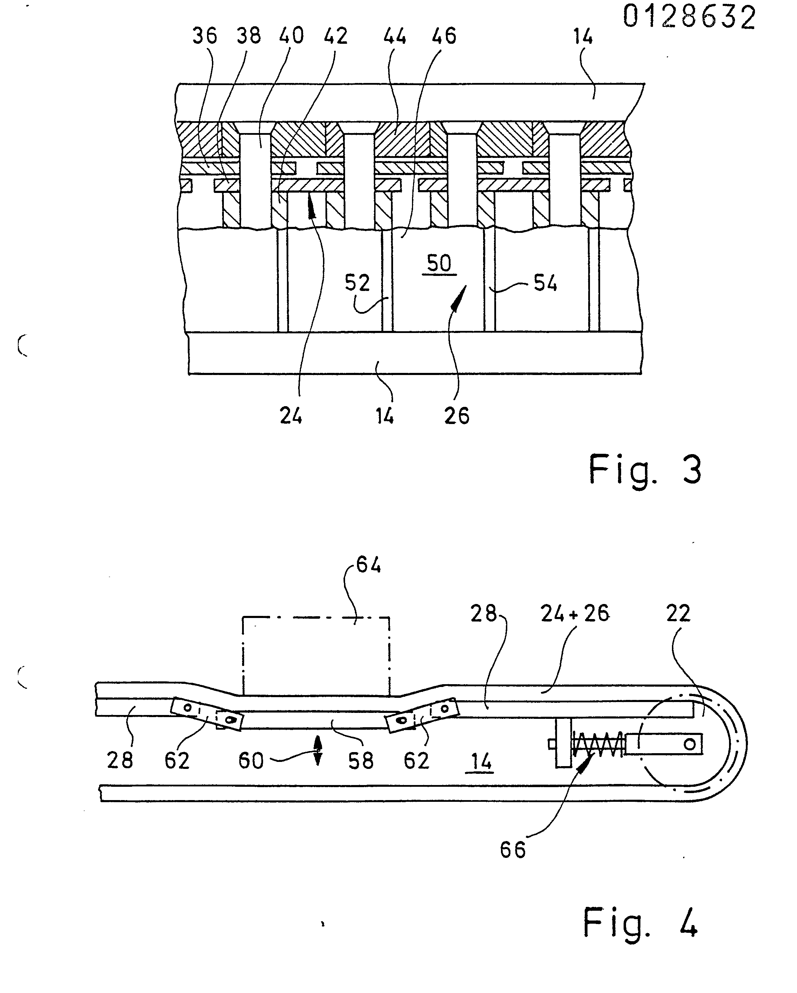

Bei der oben unter Bezugnahme auf die Figuren 1 bis 3 beschriebenen Fördereinheit ist die mit den Tragkappen 26 bestückte Gliederkette 24 in beiden Richtungen senkrecht zur
Förderebene beweglich. Man kann daher anstelle einer eben
durchgehenden Stützplatte 28 auch auf verschiedener Höhe angeordnete Stützplatten vorsehen, insbesondere auch zwischen
rahmenfeste Stützplatten eine höhenverstellbare Hubplatte
einfügen, um eine geförderte Palette bei einer Arbeitsstation
auf einem starren Maschinentisch abzusetzen. Eine derartige
vertikal verfahrbare Hubplatte ist in Figur 4 mit 58 bezeichnet. Durch einen nicht näher wiedergegebenen Antrieb ist sie
gemäß Pfeil 60 nach oben oder nach unten bewegbar. Über angelenkte Übergangsplatten 62 ist die Hubplatte 58 mit seitlich angeordneten rahmenfesten Stützplatten 28 verbunden.

In Figur 4 ist ferner bei der Hubplatte schematisch eine mit
einem Werkstück beladene Palette 64 angedeutet. Um die beim
Anheben bzw. Absenken der Hubplatte 58 auftretenden Längenänderungen der Gliederkette 24 aufnehmen zu können, ist dem
in Figur 4 rechts gelegenen der Kettenräder 22 eine Spanneinrichtung 66 zugeordnet, welche schematisch als Federzylinder angedeutet ist.

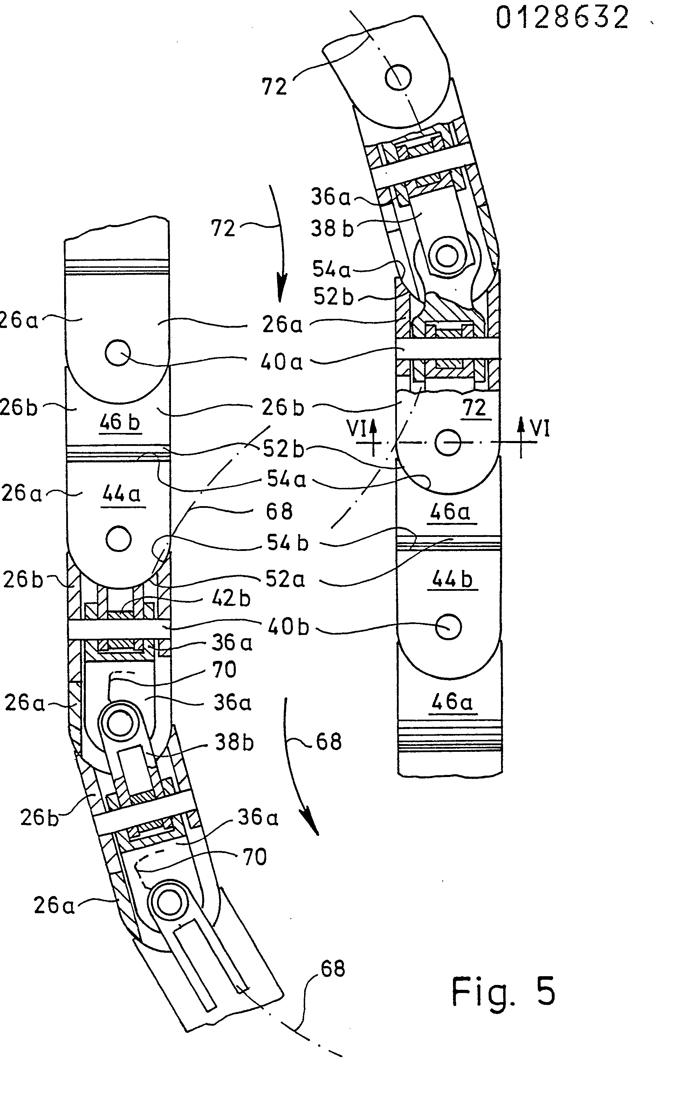

Figur 5 zeigt eine abgewandelte Gliederkette, welche als
Kreuzgelenkkette ausgebildet ist und ebenfalls mit Tragkappen bestückt ist, welche zur Mitnahme von Paletten und gleichzeitig zur Kapselung der Gliederkette dienen.

Bauteile, welche für eine normale Gliederkette unter Bezugnahme auf die Figuren 1 bis 3 schon erläutert wurden, sind wiederum mit denselben Bezugszeichen versehen. Dabei ist jeweils zusätzlich für solche Teile, welche den einen Gelenkachsen zugeordnet sind, ein "a" angehängt, während Bauteile, die den um 90° versetzten zweiten Gelenkachsen zugeordnet sind, zusätzlich durch "b" gekennzeichnet sind.

Ein wesentlicher Unterschied der Tragkappen nach Figur 5 gegenüber den Tragkappen nach den Figuren 1 bis 3 besteht darin, daß nunmehr die konvexen Stirnflächen 52 und die konkaven Stirnflächen 54 senkrecht aufeinanderstehende Zylinderachsen haben. Außerdem sind die Tragkappen 26 nunmehr mit quadratischer Außenkontur ihres transversalen Querschnittsprofiles versehen, so daß die Schenkel 44 einer betrachteten Tragkappe mit der Oberseite 50 benachbarter Tragkappen eine durchgehende Auflagefläche für die zu fördernden Paletten bilden. Ähnlich bilden Oberseite und Unterseite des anderen Satzes der Tragkappen 26 zusammen mit den Schenkeln 44 der dazwischen geschachtelten Tragkappen durchgehende seitliche Begrenzungsflächen, so daß man insgesamt ein kardanisch bewegliches flexibles Zugmittel erhält, welches quadratischen Querschnitt aufweist und glatt durchgehende Begrenzungsflächen hat.

In der linken Hälfte von Figur 5 ist mit 68 schematisch ein Umlenk-Kettenrad angedeutet, welches mit seinen Zähnen 70 durch die offenen Seiten der einen Tragkappen 26 eintreten kann, welchen Bolzen 40 mit zur Achse des Kettenrades 68 paralleler Achse zugeordnet sind. Im übrigen ist das Kettenrad 68 soweit abgedreht, daß die Tragkappen 26 unbehindert über es hinweglaufen können.

0128632

Im rechten Teil von Figur 5 sind die gleichen Kettenglieder wie im linken Teil in hierzu senkrechter Richtung wiedergegeben. Außerdem ist bei 72 ein weiteres Kettenrad angedeutet, durch welches die durch Gliederkette und Tragkappen gebildete Anordnung um eine zur Achse des Kettenrades 68 senkrechte Achse umgelenkt wird.

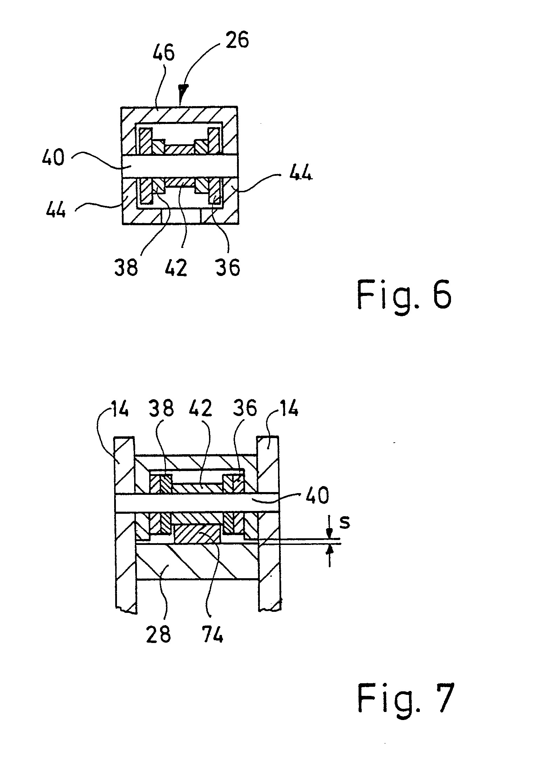

Figur 7 zeigt eine Abwandlung des Ausführungsbeispieles nach den Figuren 1 bis 3, welche ein Fördern unter verminderter Reibung ermöglicht. Hierzu ist auf der Stützplatte 28 eine Laufschiene 74 vorgesehen, welche zwischen die inneren Laschen 38 der Gliederkette 24 einführbar ist, so daß die Hülsen 42 auf der Laufschiene 74 laufen.

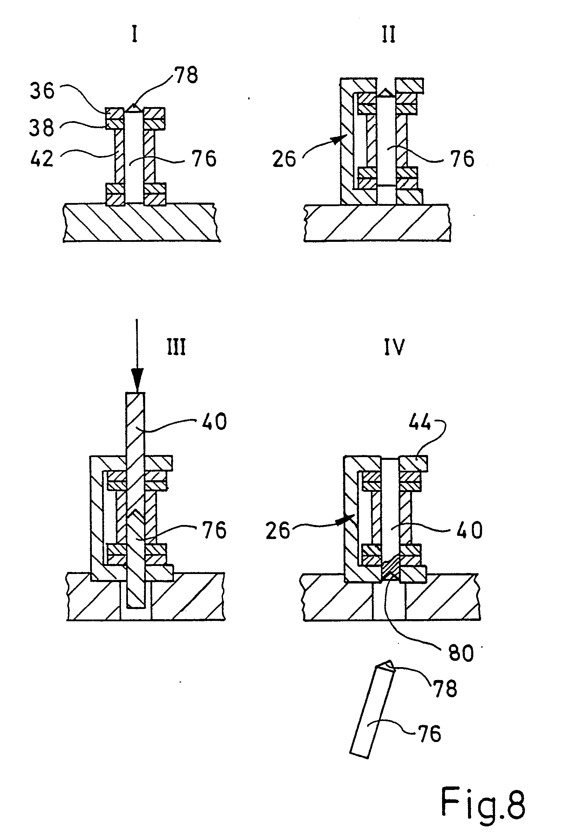

Figur 8 zeigt verschiedene Stadien des Zusammenbaus einer mit Tragkappen 26 bestückten Gliederkette 24.

Zunächst werden die äußeren Laschen 36 und die inneren Laschen 38 sowie die Hülsen 42 in üblicher Weise zusammengestellt, zum Verbinden werden aber Montagebolzen 76 verwendet, die nur in leichtem Preßsitz in den äußeren Laschen 36 sitzen, gerade ausreichend, um die verschiedenen Teile zusammenzuhalten. Die Montagebolzen 76 sind am einen Ende mit einem kegelförmigen Vorsprung 78 versehen.

Auf die so erhaltene, noch nicht belastungsfähige Kette werden dann die einzelnen Tragkappen 26 aufgeschoben und so positioniert, daß die Bohrungen in ihren Schenkeln 44 mit den Montagebolzen 76 fluchten. Die axiale Länge der letzteren kann so bemessen sein, daß der Vorsprung 78 ein leichtes Verrasten der Tragkappe 26 in etwa justierter Lage gewährleistet.

Nun wird der Montagebolzen 76 unter Verwendung des echten Kettenbolzens 40 ausgetrieben, welcher durch den einen der

0128632

Schenkel 44 eingeschlagen wird. Zum Ausgleich etwa noch vorhandener Fehljustierung der Tragkappe 26 bezüglich des Montagebolzens 76 ist der Kettenbolzen 40 mit einer Vertiefung 80 versehen, die ebenfalls kegelstumpfförmig ist, jedoch etwas größeren Öffnungswinkel hat als der Vorsprung 78. Der Kettenbolzen 40 sitzt nach dem Einschlagen in fester Preßpassung in den äußeren Laschen 36.

07.06.1984
0128632

## Patentansprüche

1. Ketten-Fördereinheit zur Verwendung in einem Palettenförderer, mit einem Rahmen, mit einer durch den Rahmen abgestützten Gliederkette und mit auf der Gliederkette angebrachten Traggliedern, deren aneinanderstoßende Stirnflächen als komplementäre Zylinderflächen ausgebildet sind, wobei die Achsen der Zylinerflächen mit Gelenkachsen der Gliederkette zusammenfallen, dadurch gekennzeichnet, daß die Tragglieder als einseitig offene, im wesentlichen U-förmigen transversalen Querschnitt aufweisende Tragkappen (26) ausgebildet sind, wobei die offenen Seiten der letzteren in die gleiche Richtung weisen und die beiden Kappenschenkel (44) einer Tragkappe (26) jeweils auf einem zugeordneten der Bolzen (40) der Gliederkette (24) angeordnet sind.

2. Fördereinheit nach Anspruch 1, dadurch gekennzeichnet, daß jedem Bolzen (40) der Gliederkette (24) eine Tragkappe (26) zugeordnet ist.

3. Fördereinheit nach Anspruch 1 oder 2, dadurch gekennzeichnet, daß die Schenkel (44) der Tragkappen (26) über die von den Tragabschnitten (46) abgewandte Seite der Gliederkette (24) hinausgeführt sind und mit einer ebenen, zum Tragabschnitt (46) parallelen Gleitfläche (48) versehen sind, welche auf der Abstützfläche (28) des Rahmens laufen.

4. Fördereinheit nach Anspruch 3, dadurch gekennzeichnet, daß ein Teil der Abstützfläche des Rahmens durch eine zwischen die Laschen (36, 38) der Kettenglieder eingreifende mit den Kettenhülsen (42) zusammenarbeitende Laufschiene (74) gebildet ist, deren Höhe so bemessen ist, daß die Gleitflächen (48) der Tragkappen (26) von der Abstützfläche (28) freikommen.

1559.8 — 2 —

5. Fördereinheit nach einem der Ansprüche 1 bis 4, dadurch gekennzeichnet, daß die Tragkappen (26) bei ihren konvex gekrümmten Endflächen (52) einen zur Gliederkette (24) nach innen gezogenen, die Kappenschenkel (44) verbindenden Dichtsteg (56) aufweisen, dessen Oberseite eine glatte Fortsetzung der konvexen Zylinderfläche (52) darstellt.

6. Fördereinheit nach einem der Ansprüche 1 bis 5, dadurch gekennzeichnet, daß ein Teil der Abstützfläche des Rahmens von einer senkrecht zur Förderebene verstellbaren Hubplatte (58) gebildet ist und daß Mittel (66) zum Kompensieren von Änderungen in der Länge der Gliederkette (24) beim Verlagern der Hubplatte (58) vorgesehen sind.

7. Fördereinrichtung nach einem der Ansprüche 1 bis 6, dadurch gekennzeichnet, daß die Außenflächen der Kappenschenkel (44) planparallel sind und in Gleitpassung zwischen seitlichen Wangenplatten (14) des Rahmens laufen.

8. Fördereinheit nach einem der Ansprüche 1 bis 6, wobei die Förderkette als Kreuzgelenkkette ausgebildet ist, bei welcher die Gelenkachsen zweier ineinandergeschachtelter Sätze äquivalenter Kettenglieder um einen Winkel von vorzugsweise 90° gegeneinander verkippt sind, dadurch gekennzeichnet, daß die konvexe Zylinderfläche (52) am einen Ende einer Tragkappe (26) und die konkave Zylinderfläche (54) am anderen Ende einer Tragkappe (26) Achsen haben, welche gemäß dem von aufeinanderfolgenden Bolzen (40) der Kreuzgelenkkette (24) eingeschlossenen Winkel gegeneinander verkippt sind, und daß die Außenkontur der transversalen Querschnittsfläche der Tragkappen (26) einem Quadrat entspricht.

9. Fördereinheit nach Anspruch 8, dadurch gekennzeichnet, daß die Bolzen (40) der Gliederkette (24) in oder kurz hinter

— 3 —

07.06.1984
0128632

der Außenfläche der Kappenschenkel (44) enden.

10. Verfahren zum Herstellen einer Fördereinheit nach einem der Ansprüche 1 bis 9, dadurch gekennzeichnet, daß die Laschen, Bolzen und Hülsen der Gliederkette in an sich bekannter Weise zusammenmontiert werden, wobei jedoch Montagebolzen verwendet werden, welche im leichten Preßsitz in die äußeren Laschen passen und deren Länge kleiner ist als der lichte Abstand zwischen den Kappenschenkeln; daß anschließend die Tragkappen über die so vorgefertigte Kette geschoben und mit ihren Bolzen-Aufnahmeöffnungen auf die Montagebolzen ausgerichtet werden; und daß anschließend die Montagebolzen unter Verwendung von Kettenbolzen aus der Gliederkette herausgestoßen werden, welche durch die Bolzenaufnahmeöffnungen der Tragkappen eingeführt werden und größere Länge haben als dem lichten Abstand zwischen den Kappenschenkeln entspricht.

11. Verfahren nach Anspruch 10, dadurch gekennzeichnet, daß die Montagebolzen zumindest an einem Ende mit einer zentralen Vertiefung oder vorzugsweise einem zentralen Vorsprung versehen sind, welcher mit einem im wesentlichen komplementären Formschlußmittel an mindestens einem Ende der Kettenbolzen zusammenarbeiten.

Fig. 1

Fig. 2

0128632

Fig. 3

Fig. 4

0128632

Fig. 5

0128632

Fig. 6

Fig. 7

Fig.8